Europäisches Patentamt

European Patent Office

Office européen des brevets

(11) Publication number: **0 418 585 A1**

# EUROPEAN PATENT APPLICATION

(21) Application number: **90116181.0**

(51) Int. Cl.⁵: **B29B 7/76**

(22) Date of filing: **23.08.90**

(30) Priority: **24.08.89 US 398355**

(43) Date of publication of application:
**27.03.91 Bulletin 91/13**

(84) Designated Contracting States:
**DE GB IT**

(71) Applicant: **DOW CORNING CORPORATION**
**P.O. Box 1767**
**Midland Michigan 48686-0994(US)**

(72) Inventor: **Bauman, Therese Marie**
**1313 Terrell Court**
**Canton, Michigan(US)**
Inventor: **Klenk, Todd Steven**
**9021 Apple Orchard Drive**
**Fenton, Michigan(US)**

(74) Representative: **Spott, Gottfried, Dr. et al**
**Spott Weinmiller & Partner**
**Sendlinger-Tor-Platz 11**
**W-8000 München 2(DE)**

(54) **Foam mixer-applicator with foaming chamber and method of using.**

(57) A foam mixer-applicator for mixing a two-part foamable composition which includes a) a mixing head (30) having a mixing chamber for mixing the two parts of the foamable composition, which is sealingly connected to b) a foaming chamber housing (54) having a foaming chamber (52) of a substantially greater capacity than the mixing chamber and an outlet port (58) for discharging the foam composition after foaming and acquiring a higher, yet flowable viscosity, and c) means (94) for pushing the foamed composition through the outlet port of the foam chamber housing.

Fig. 1

## FOAM MIXER-APPLICATOR WITH FOAMING CHAMBER AND METHOD OF USING

Various devices for mixing and applying multi-component reactive foamable compositions have been disclosed in the prior art. Many of these devices are concerned with the thorough mixing of the reactive ingredients before discharging the composition from the device. However, when these devices are used to apply a foamable composition to a surface, often the exiting composition is of such a low viscosity that the composition flows too easily, not staying in the desired place of application. This is especially found true when the compositions are slow to foam or slow to cure or the surface for application is on an incline. For example, in automobile manufacturing, voids in the body of the automobiles are .sealed at their openings with polymeric foamed-in-place foam for reduction of audible wind, engine and road noise in the passenger compartment. Often, these voids are vertical or on an incline and are open at the bottom so that low-viscosity compositions would readily flow toward the bottom or out of the void. Depending on the type of foam used, the discharging composition from prior art mixer-applicators may be quite flowable and of high density (low volume per weight). Thus, in instances where the voids are inclined and the sealing compositions have low-viscosity, a relatively large amount of composition is required to seal the top of the void and often metal barriers are added to provide a ledge to retard the flow of material through the void.

It is, therefore, an object of this invention to provide a method and a device by which an operator can have control over the viscosity and expansion of a discharging foamable composition, thus giving the operator more placement control. It is a further object of this invention to provide a method and a device by which foam can be applied to inclined surfaces without ledges with more assurance of the foam staying in place. It is further an object of this invention to provide an improved method and device for sealing inclined openings with a foamed material so that less foamed material may be used, resulting in lower overall cost.

The invention disclosed herein provides a device and a method for mixing, foaming and discharging a multi-component foamable composition. The device of this invention is a foam mixer-applicator for mixing a foamable composition comprising a) a mixing head having a mixing chamber for mixing the ingredients of the foamable composition, an inlet passageway extending from outside the mixing head to the mixing chamber providing a path for the components of the composition to enter the mixing chamber and an outlet hole extending from the mixing chamber to outside the mixing chamber providing a path for discharging the foam composition after mixing, b) a foaming chamber housing sealingly attached to the mixing head at the outlet hole, having a foaming chamber of a substantially greater capacity than the mixing chamber, an inlet port located at the outlet hole of said mixing chamber providing fluid communication between the mixing chamber and the foaming chamber and an outlet port for discharging the foam composition after foaming and acquiring a higher, yet flowable viscosity, and c) means for pushing the foamed composition through the outlet port of the foam chamber housing. Preferably, the outlet port of the foaming chamber is at the opposite end from the inlet port on the foaming chamber. The apparatus of this invention is particularly suited for mixing and discharge of two part foamable compositions such as commercially available two part silicone or polyurethane foam compositions. However, one part compositions or those having more than two parts may also be applied using the device. Persons skilled in the art will adjust the inlet passages to suit the particular foam composition. In the case of one part foamable compositions of the inhibited cure type, it may be necessary to provide means for heating the foaming chamber to effect cure. In other cases compressed gas may be added to the composition.

In using the device of this invention, foamable composition is mixed thoroughly in the mixing chamber and discharged into the foaming chamber until the foaming chamber is only partially filled. Such mixing is particularly important in the case of two part foamable compositions. In the mixing chamber itself, the composition does not foam or foams very little. Then, in the foaming chamber, the mixed foamable composition is allowed to foam and increase in viscosity to the desired degree and is then discharged from the outlet port of the foaming chamber and applied onto the desired surface. The amount of time needed for foam development will depend on the specific foam used and the desired degree of foam development. However, for most applications, waiting a few to several seconds (5-60 seconds) will be sufficient. When the foamed composition is discharged from the foaming chamber it is more viscous but still flowable. Discharging of the foamable composition must be done before the composition becomes cured to a non-flowing mass. The amount of foam development (cell structure definition, expansion and decrease in flowability) depends on the specific application and the materials used.

The foaming chamber must be designed to allow enough space for the desired amount of developed foam. A typical volume of the foaming chamber would be greater than 200 times larger than the volume of the mixing chamber, preferably 500 times and more preferably, 1000 times larger. Typical volumes for the foaming chamber may range from one half pint to one gallon. Typically, with this invention, the inner diameter of the foaming chamber is significantly larger than the inner diameter of the mixing chamber (e.g. five times to greater than ten times larger), although this is not necessarily always the case.

Any type of reactive composition which spontaneously foams upon mixing is suitable for use in the device and method of this invention. Especially suitable compositions are those which do not cure or develop (foam and thicken) immediately or very quickly. For example, silicone foaming compositions generally do not thicken immediately, but thicken while foaming. This device provides a means by which slow-developing foams may foam and thicken before being applied.

By keeping the foamable composition in the foaming chamber until maximum expansion and viscosity is reached, the foam will spread the least and will fill or seal off voids the fastest and with the least amount of material.

The above and other objects and advantages of the present invention will become apparent to those skilled in the art upon an examination of the following description and drawings which are illustrative of the present invention.

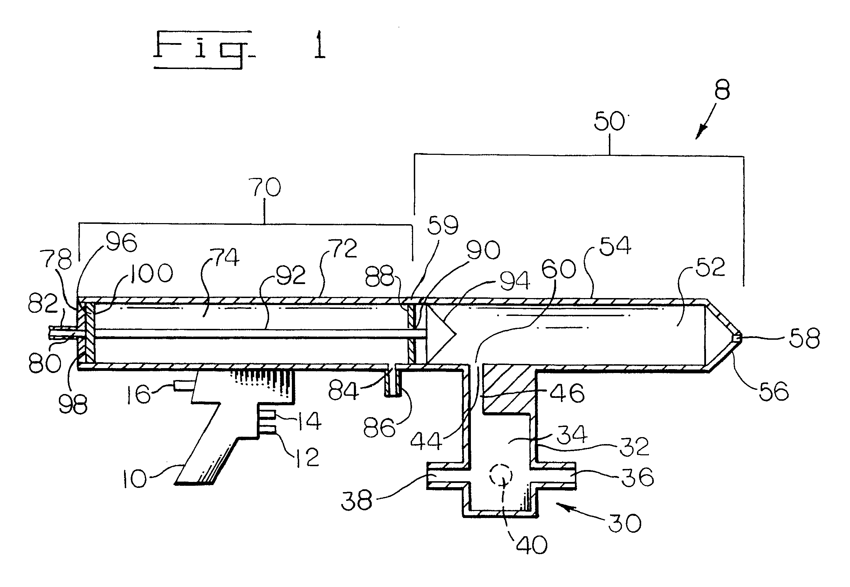

Referring to the Drawing, FIG. 1 depicts a preferred form of a foam mixer-applicator according to the invention. Generally, the mixer-applicator shown in FIG. 1 (indicated by reference numeral 8) has handle 10, mixing head 30, foaming chamber 50 and air cylinder assembly 70. Mixing head 30 has mixing housing 32 and mixing chamber 34 within mixing housing 32 and inlet passageways 36, 38 and 40 extending from outside mixing head 30 to mixing chamber 34 to provide entrance of fluids into mixing chamber 34. Inlet passageways 36 and 38 each provide an entrance path for a part of a two-part foamable composition and inlet passageway provides entrance of pressurized air or other gas into mixing chamber 34. More inlet passageways may be provided in the mixing housing if needed, for example, as in the case when the composition is formed of more than two parts. Inlet passageways 36, 38 and 40, as shown, are positioned so that fluid streams entering via passageways 36, 38 and 40 will impinge on each other at fast flow rates for improved mixing. Mixing head 30 also has outlet hole 44 located at the end opposite inlet passageways 36, 38 and 40 providing an exit for foam composition from mixing chamber 34. As part of mixing head 30, there is provided an optional mixing channel 46 between mixing chamber 34 and outlet hole 44 which, along with the rate of flow of the composition, is designed to allow for better mixing of the multi-part composition before leaving mixing head 30.

Mixing head 30 is sealingly attached, in any suitable manner, to foaming chamber housing 50 so that outlet hole 44 of mixing head 30 is in fluid communication with inlet port 60 of chamber housing 50. Inlet port 60 leads from outside foaming chamber housing 50 to foaming chamber 52 inside foaming chamber housing 50. Foaming chamber 52 is significantly larger than mixing chamber 34 or than mixing chamber 34 combined with mixing channel 46. Mixed foam composition exits mixing head 30 and enters foaming chamber 52 which provides an enclosed space to allow the mixed foam composition to develop, thicken and foam before being applied to a desired substrate. Foaming chamber housing 50 is shown as a cylindrical container 54 having a conical end 56, an outlet port 58 at the tip of conical end 56 and the other end at location 59 at the opposite end of conical end 56. Inlet port 60 is located on the side of cylindrical container 54 near location 59.

Foaming chamber housing 50 is attached to a means for discharging foamed composition from foaming chamber 52 through outlet port 58. The means shown for discharging the foamed composition, air cylinder assembly 70, includes a cylindrically-shaped air cylinder housing 72 containing air cylinder chamber 74. An end of air cylinder housing 72 is sealingly attached to foaming chamber housing 50 at location 59 and end 78 is closed and has air inlet opening 80 with fitting 82. On the side of air cylinder housing 72 close to location 59, is air inlet opening 84 with fitting 86.

Inside the housings, at the connection between foaming chamber housing 50 and air cylinder housing 72, there is round disc 88 having aperture 90 in its center. Fitting 86 and air inlet opening 84 must be on the side of round disc 88 that is facing end 78 of air cylinder housing 72. Round disc 88 has a diameter similar to the inside diameters of air cylinder housing 72 and foaming chamber housing 50 and is permanently and sealingly fixed inside the housings so that the diameter of round disc 88 meets the inside diameter of the housings. Through aperture 90 extends rod 92 which has connected at one end plunger head 94. Aperture 90 is sized so that rod 92 sealingly glides through aperture 90. To ensure an air-tight relationship between disc 88 and rod 92, disc 88 may have a rubber O-ring located in aperture 90. Rod 92 and plunger head 94 are positioned so that plunger head 94 is inside foaming chamber housing 50. Plunger head 94 is dimensioned to matingly fit inside conical end 56. Attached to the other end of rod 92 is circular seal 96 which has the same diameter as and is in sealing relationship with the inside diameter of air cylinder chamber 74. For example, seal 96 may have a rubber O-ring around its circumference to provide a tighter seal with the inside surface of air cylinder chamber 74. Seal 96 has two sides, side 98, which faces end 78 of air cylinder housing 72 and side 100, which faces foaming chamber 50. The space between closed end 78 of air cylinder housing 72 and side 98 of seal 96 must be essentially air-tight for the air cylinder to operate, which will be further described below. Seal 96, rod 92 and plunger head 94, which together make up the "plunger system", are all longitudinally movable together within air cylinder housing 72 and foaming chamber housing 50. When plunger head 94 meets conical end 56, conical end 56 serves as a means to stop the plunger system from travelling further. In the reverse direction, when the plunger system is returning to the retracted position and seal 96 meets closed end 78, closed end 78 serves as a means to stop the plunger system from travelling further. Disc 88 may also serve as a means to limit the distance the plunger system can travel toward conical end 56 because seal 96 could not travel past disc 88.

During operation, when pressurized air is added to air cylinder chamber 74 through air inlet opening 80 so that the air pressure at side 98 of seal 96 exceeds the air pressure at side 100 of seal 96, the plunger system is pushed in the direction of conical end 56 causing the contents of foaming chamber 52 to empty through outlet port 58. In order for pressurized air to push seal 96 toward conical end 56, the space in air cylinder chamber 74 between seal 96 and closed end 78 must be essentially air-tight. The total length of the plunger system should also be dimensioned so that when it is pushed flush to outlet port 58, plunger head 94 fits inside conical end 56, so that any foamed composition inside foaming chamber 52 is pushed out of outlet end 58. In this manner, the plunger system cleans the foaming chamber 52 of foam composition without the use of solvents. The total length of the plunger system should be dimensioned with respect to the location of air inlet opening 84, so that when it is pushed toward outlet port 58, air inlet opening 84 is between seal 96 and round disc 88. This essentially means that the length of the plunger system must be at least slightly longer than the length from air inlet opening 84 to outlet end 58. When pressurized air is added to air cylinder chamber 74 through air inlet opening 84 so that the pressure on side 100 of seal 96 exceeds the pressure on side 98 of seal 96, the movable plunger system is retracted or forced toward end 78 of air cylinder housing 72. For this operation to occur, the space air cylinder chamber 74 between disc 88 and seal 96 must be substantially air-tight. In the retracted position, the foaming chamber 52 is ready to be filled with foamable composition.

Handle 10 is attached to air cylinder housing 72 to allow mixer-applicator 8 to be hand-held and operated. Handle 10 has triggers 12, 14 and 16 which are connected via air lines to the appropriate pneumatically-controlled valves (connection and valves not shown) for activating the air addition to air cylinder chamber 74 (thus, activating the plunger system) and the addition of the composition components to mixing chamber 34.

During use of mixer-applicator 8, when the plunger system is in the retracted position, trigger 14 is first activated to allow pressurized air and pressurized components of a two-part foamable composition to enter the mixing chamber 34 through inlet passageways 36, 38 and 40, thus causing impingement mixing of the components and air. The composition then travels through mixing channel 46 where it becomes thoroughly mixed and then dumps into and partially fills foaming chamber 52. The composition, upon entering foaming chamber 52, needs no further mixing and no significant mixing occurs in foaming chamber 52. There are no baffles or means for mixing the composition needed inside the foaming chamber; the foaming chamber, therefore, can be an essentially empty chamber, as shown. Once foaming chamber 52 is filled to the desired degree, the addition of air and reactants to mixing head 30 is discontinued. The extent of filling foaming chamber 52 depends on the degree of foaming or expansion desired before discharging the foamed composition from the foaming chamber 52 and the quantity of foam desired. Once the foam reaches the desired expansion and viscosity, trigger 16 is activated so that pressurized air is added to air cylinder chamber 74 through air inlet opening 80, so that the plunger system is forced forward toward conical end 56 of foaming chamber housing 50. The plunger system forces the foamed, yet flowable, composition out of foaming chamber through outlet port 58, where the operator may direct its application to a desired substrate. This plunging action also provides the foaming chamber with a way of self-cleaning and without the use solvents. After foaming chamber 52 is emptied of the foamed composition, trigger 12 is activated so that pressurized air is added through air inlet opening 84 to force the plunger system back to the retracted position, toward end 78 of air cylinder housing 72 and mixer-applicator 8 is then ready for repeating the procedure.

The mixer-applicator of this invention may be used for both high and low-pressure applications, where air pressures are as low as about 90 psi and as high as 3000 psi. The mixer-applicator may be formed of any suitable material, so long as it can withstand the use pressure. Preferably, the plunger head is formed of non-stick material, such as polytetrafluoroethylene.

Variations on the mixer-applicator design described above may be made. For example, a plunger system operated by manually pushing can replace the air-actuated air cylinder assembly. Various designs of the mixing chamber may be employed; impingement mixing was chosen only for illustration. Different shapes of the mixing chamber and housing, foaming chamber and housing and air cylinder chamber and housing than that what is shown would be suitable.

These and other variations of the present invention may be made which fall within the scope of the appended claims even though such variations were not specifically discussed above.

## Claims

1. A foam mixer-applicator for mixing a foamable composition, comprising
   a) a mixing head having a mixing chamber for mixing the components of the foamable composition, an inlet passageway extending from outside said mixing head to said mixing chamber providing a path for said components of the composition to enter said mixing chamber and an outlet hole extending from said mixing chamber to outside said mixing head providing a path for discharging the foam composition after mixing,
   b) a foaming chamber housing sealingly attached to said mixing head at said outlet hole, having a foaming chamber of a substantially greater capacity than said mixing chamber, an inlet port located at said outlet hole of said mixing head which extends from outside said foaming chamber housing to said foaming chamber for providing fluid communication between said mixing chamber and said foaming chamber and an outlet port extending from said foaming chamber to outside said foaming chamber housing for discharging said foam composition after foaming and acquiring a higher, yet flowable viscosity, and
   c) means for pushing said foamed composition through said outlet port of said foam chamber housing.

2. A foam applicator for dispensing a foam composition comprising
   a) a dispensing chamber,
   b) a foaming chamber housing sealingly attached to said mixing head at said outlet hole, having a foaming chamber of a substantially greater capacity than said mixing chamber, an inlet port located at said outlet hole of said mixing head which extends from outside said foaming chamber housing to said foaming chamber for providing fluid communication between said mixing chamber and said foaming chamber and an outlet port extending from said foaming chamber to outside said foaming chamber housing for discharging said foam composition after foaming and acquiring a higher, yet flowable viscosity,
   c) means for pushing said foamed composition through said outlet port of said foam chamber housing, and
   d) discharging said flowable, but foamed composition through said outlet port of said foaming chamber onto said substrate.

Fig. 1

EP 0 418 585 A1

European
Patent Office

EUROPEAN SEARCH
REPORT

Application Number

EP 90 11 6181

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 196 345 (KRAUSS-MAFFEI)<br>* Page 5, last paragraph - page 6, paragraph 1; fig. *<br>— — — | 1,2 | B 29 B 7/76 |
| X | DE-A-3 213 153 (BASF)<br>* Abstract; fig. *<br>— — — | 1,2 | |
| A | EP-A-0 070 486 (HENNECKE)<br>— — — | | |
| A | EP-A-0 024 330 (BAYER)<br>— — — | | |
| A | EP-A-0 091 050 (AFROS)<br>— — — | | |
| A | DE-A-2 513 492 (UPJOHN)<br>— — — | | |
| A | GB-A-2 164 864 (AFROS)<br>— — — — — | | |

| TECHNICAL FIELDS SEARCHED (Int. Cl.5) |
|---|
| B 29 B |

The present search report has been drawn up for all claims

| Place of search | Date of completion of search | Examiner |
|---|---|---|
| The Hague | 05 December 90 | PEETERS S. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document